Europäisches Patentamt

European Patent Office

Office européen des brevets

(11) Publication number: **0 223 358**
**B1**

## (12) EUROPEAN PATENT SPECIFICATION

(45) Date of publication of the patent specification:
27.06.90

(51) Int. Cl.⁵: **B60T 8/58,** B60T 8/64, B60T 8/32

(21) Application number: **86307113.0**

(22) Date of filing: **16.09.86**

(54) Anti-lock brake control apparatus.

(30) Priority: **21.10.85 US 789576**

(43) Date of publication of application:
**27.05.87 Bulletin 87/22**

(45) Publication of the grant of the patent:
**27.06.90 Bulletin 90/26**

(84) Designated Contracting States:
**DE FR GB IT**

(56) References cited:
**US-A- 3 131 975**
**US-A- 3 663 069**
**US-A- 4 094 555**
**US-A- 4 225 195**

**PATENTS ABSTRACTS OF JAPAN, vol. 8,**
**no. 100 (M-295)(1537), May 11, 1984; & JP - A**
**- 5 914 566 (NIPPON DENKI K.K.) 25.01.1984**

(73) Proprietor: **GENERAL MOTORS CORPORATION,**
**General Motors Building 3044 West Grand Boulevard,**
**Detroit Michigan 48202(US)**

(72) Inventor: **Kade, Alexander, 1071 Hollywood, Grosse**
**Pointe Woods Michigan 48236(US)**
Inventor: **Hopkins, Harland Glenn, 11953 Angus Circle,**
**Sterling Heights Michigan 48077(US)**
Inventor: **Salman, Mutasim Abdurrahman,**
**1174 Woodside Trail, Troy Michigan 48098(US)**

(74) Representative: **Denton, Michael John et al, Patent**
**Section - Luton Office (F6) Vauxhall Motors Limited P.O.**
**Box 3 Kimpton Road, Luton Bedfordshire LU2 0SY(GB)**

## Description

This invention relates to an anti-lock control apparatus for the brakes of a vehicle, and to a method of operating such apparatus.

When the brakes of a vehicle are applied, a braking force between the wheel and the road surface is generated that is dependent upon various parameters including the road surface condition and the amount of slip between the wheel and the road surface. For a given road surface, the force between the wheel and the road surface increases with increasing wheel slip values to a peak force occurring at a critical wheel slip value. As the value of wheel slip increases beyond the critical wheel slip value, the force between the wheel and the road surface decreases. Stable braking results when the wheel slip value is equal to or less than the critical wheel slip value. However, when the wheel slip value becomes greater than the critical wheel slip value, braking becomes unstable resulting in sudden wheel lockup, reduced vehicle stopping distance and a deterioration in the lateral stability of the vehicle.

Numerous anti-lock control apparatuses have been proposed to prevent the wheels from locking up while being braked. Typically, these apparatuses prevent the wheels from locking by releasing the applied brake pressure when an incipient wheel lockup condition is sensed. One criteria that is used to sense an incipient wheel lockup condition is excessive wheel deceleration. After release of the brake pressure, the wheel deceleration ceases and the wheels then accelerate toward vehicle speed. When the wheel speed has substantially recovered, brake pressure is reapplied. One criteria that is typically used to sense recovery is wheel acceleration falling below a specified low value. Reapplication of brake pressure results in the wheel again approaching lockup and the cycle is repeated. This form of anti-lock control apparatus results in a rapid cycling of the brake pressure and the wheel slip value around the critical wheel slip value to prevent wheel lockup. Ten Hertz is a typical cycling frequency. An example of the above is disclosed in US-A 4 094 555.

An anti-lock control apparatus, and a method of operation thereof, in accordance with the present invention is characterised over US-A 4 094 555 by the features specified in the characterising portions of Claims 1 and 5 respectively.

As opposed to the foregoing apparatuses for preventing wheel lockup during braking, the subject invention is directed toward apparatus which identifies the wheel brake pressure that results in the wheel slip value being at the critical wheel slip value and which produces the maximum braking force between the tyre and the road surface. The brake pressure so identified is then applied to the brake so as to substantially continuously establish the critical wheel slip value between the wheel and the road surface resulting in the maximum possible braking effort.

In general, the subject invention repeatedly calculates the braking force between the wheel and the road surface during braking from apparatus constants and measured values and stores the brake pressure corresponding in time to the peak calculated force. When an incipient wheel lockup condition is detected indicating that the critical wheel slip value and therefore the peak braking force between the wheel and road surface has been exceeded, the stored brake pressure that produced the peak braking force is reestablished to establish a braking condition in which the wheel slip value is substantially at the critical slip value for the existing road-tyre interface condition.

In one aspect of this invention, the braking pressure reestablished to produce the critical wheel slip value is automatically adjusted to compensate for changing apparatus parameters and for other errors that may exist in the calculation of the braking force to provide for apparatus that self-adapts to those changes and errors.

The invention is now described, by way of example, with reference to the following description of a preferred embodiment and the accompanying drawings, in which:

Figure 1 is a diagram illustrating the brake force coefficient between a wheel and a road surface as a function of the percentage slip between the wheel and road surface for two road surface conditions;

Figure 2 is a general diagram of the anti-lock control apparatus for controlling the brakes in accordance with the principles of this invention;

Figure 3 is a longitudinal cross-sectional view of the actuator of Figure 2 for modulating the brake pressure to prevent wheel lockup;

Figure 4 is a diagram of the electronic controller of Figure 2 that is responsive to apparatus parameters for controlling the brake pressure to inhibit wheel lockup in accordance with the principles of this invention; and

Figures 5 to 8 are diagrams illustrating the operation of the electronic controller of Figure 4.

A wheel under the influence of braking has two major torques acting on it: brake torque and tyre torque. Brake torque arises from the application of brake pressure through the brake mechanism and tyre torque is generated by the friction of the tyre-road interface as wheel slip occurs.

Brake torque $T_b$ is assumed to be proportional to brake pressure $P_b$ with a known brake gain $K_b$ and is defined by the expression

$$T_b = P_b K_b. \quad (1)$$

Tyre torque $T_t$ is related to the braking force and is thereby related to the brake friction coefficient $\mu$ between the tyre and the road surface, the normal load $N$ on the tyre and the wheel rolling radius $R$ and is defined by the expression

$$T_t = \mu NR. \quad (2)$$

For the free body consisting of the brake, wheel, and tyre, the equation of motion is

$$I_w \dot{\omega} + T_b - T_t = 0 \quad (3)$$

where $I_w$ is the wheel moment of inertia and $\dot{\omega}$ is the wheel acceleration. When the difference between the tyre torque $T_t$ and the brake torque $T_b$ is positive, the wheel accelerates; and when negative, the wheel decelerates.

Rearranging expression (3), tyre torque $T_t$ is defined as

$$T_t = I_w \dot{\omega} + T_b. \quad (4)$$

As can be seen, the tyre torque can be calculated from values that are either known or can be measured. The wheel moment of inertia $I_w$ and the brake gain $K_b$ are known values, the value of brake pressure $P_b$ can be measured and $\dot{\omega}$ can be determined by differentiating the value of wheel speed which can be measured.

The brake friction coefficient term $\mu$ of the tyre torque $T_t$ is a nonlinear function of the magnitude of slip between the wheel and the road surface during braking and is dependent upon the road surface condition. Figure I illustrates the brake friction coefficient $\mu$ as a function of percentage-wheel slip for two road surface conditions. For a given road surface, it can be seen that as wheel slip is increased in response to increased brake torque $T_b$, the brake friction coefficient $\mu$ and therefore the tyre torque $T_t$ increases until a critical wheel slip value at which the brake friction coefficient and the tyre torque $T_t$ are at a maximum. A further increase in wheel slip results in a decrease in the brake friction coefficient $\mu$ and tyre torque $T_t$. The maximum tyre torque resulting in a maximum braking effort for a given road surface is achieved when the brake torque $T_b$ produces the critical wheel slip value. When the braking effort produces a wheel slip exceeding the critical wheel slip value, the braking operation becomes unstable and typically results in sudden wheel lockup which in turn results in increased stopping distance and a deterioration in the steering and lateral stability of the vehicle.

In general, the anti-lock control apparatus incorporating the principles of this invention identifies the value of the braking pressure $P_b$ that produces the maximum tyre torque $T_t$. This is accomplished by continuously calculating the tyre torque value $T_t$ of equation (4) above during braking. Any time the calculated value is larger than any previously calculated value, the value of the braking pressure $P_b$ is stored so that the brake pressure producing the maximum tyre torque is known. When an incipient wheel lock is detected, the brake pressure is dumped to allow the wheel speed to recover and the brake pressure is thereafter reapplied to the stored value to establish a braking condition in which the wheel slip value is substantially at the critical wheel slip value for the existing road surface condition. This results in substantially the maximum possible tyre torque $T_t$ and minimum stopping distance for the road surface condition.

If for some reason, such as a change in the apparatus parameters over time, there exists an error in the calculated tyre torque $T_t$ which results in the storing and subsequent reapplication of an unstable brake pressure, the brake pressure is adaptively reduced until a stable pressure is identified that produces substantially the critical wheel slip value and therefore the maximum braking effort. This is accomplished by establishing the reapplied brake pressure at a predetermined fraction of the stored brake pressure that corresponded in time to the maximum calculated value of tyre torque $T_t$. If the resulting applied brake pressure results in a sensed incipient wheel lockup condition, the brake pressure next applied is again reduced by the fraction. The repeated reduction of the applied brake pressure by this predetermined fraction, such as 0.9, provides for self-adaptation to changing apparatus parameters including changes in the coefficient of friction of the brake linings or for any errors in the coefficients utilized in the calculation of tyre torque.

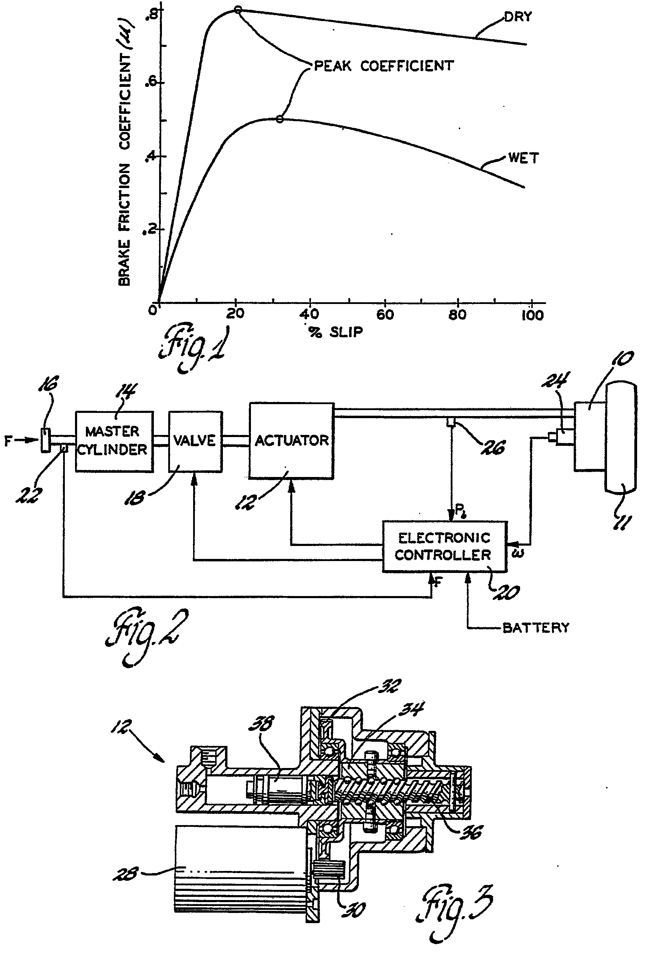

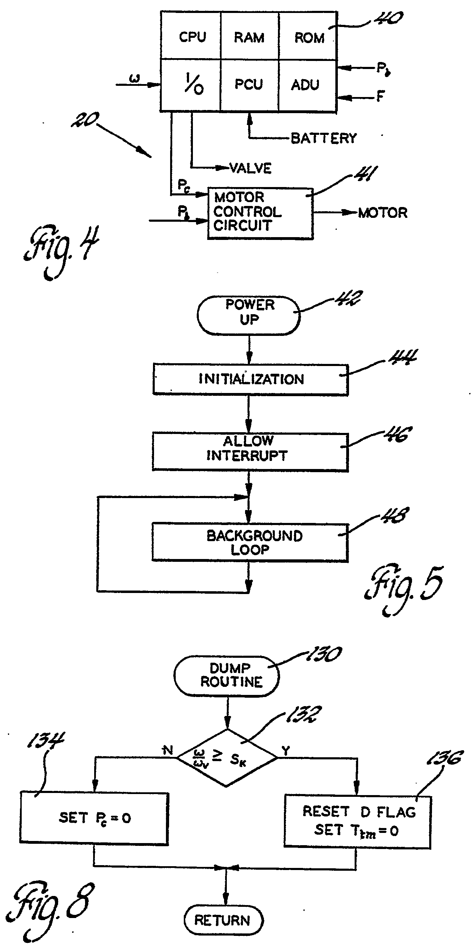

A general overview of the anti-lock control apparatus of this invention is illustrated in Figure 2. The control of the brake of a single wheel is illustrated, it being understood that the control of the brakes of the remaining wheels of the vehicle are identical thereto. A standard brake I0 for a wheel II is actuated by controlled hydraulic pressure from one of two sources. The primary source is an actuator I2 which is motor driven and the secondary source is a standard master cylinder I4 controlled directly by a brake pedal I6. An electromagnetic valve I8 (which is normally open) is energized when the actuator I2 is operative to control the hydraulic pressure to the brake I0 so as to decouple the master cylinder I4 and brake pedal I6 from the hydraulic pressure output of the actuator I2. This prevents pressure feedback to the vehicle operator while brake pressure is controlled by the actuator I2. When the electromagnetic valve I8 is deenergized, the hydraulic pressure to brake I0 may be modulated directly by the brake pedal I6 and master cylinder I4.

The electromagnetic valve I8 is deenergized only during limited vehicle operating conditions such as low vehicle speed or during failed conditions of the primary hydraulic pressure source to permit brake pressure modulation by the master cylinder I4. At all other times, the electromagnetic valve I8 is energized to decouple the master cylinder I4.

An electronic controller 20 is responsive to the outputs of a brake pedal force sensor 22 providing a signal that is a measure of the brake pedal force $F$ applied by the operator, a wheel speed sensor 24 that provides a signal that is a measure of wheel speed $\omega$, and a pressure sensor 26 that provides a signal that is a measure of the hydraulic brake pressure $P_b$ applied to the brake I0 from the master cylinder I4 or the actuator I2. Actuator I2, master cylinder I4 and electronic controller 20 define applying means for applying the brake pressure at a value in accordance with a vehicle operator brake command. The electronic controller 20 is responsive to those signals to (a) energize the electromagnetic valve I8 when the wheel speed $\omega$ exceeds a value corresponding to a low vehicle speed such as 3 mph, (b) control the actuator I2 so as to apply a hydraulic brake pressure $P_b$ to the brake I0 that is proportional to the brake pedal force $F$ times a gain constant $G$ for providing power assist during normal braking conditions, and (c) limit the brake pressure $P_b$ applied to the brake I0 to a value that re-

sults in the maximum possible tyre torque $T_t$ for the road surface condition to prevent wheel lockup and to provide for the shortest possible stopping distance, lateral vehicle stability, and controllable vehicle steering.

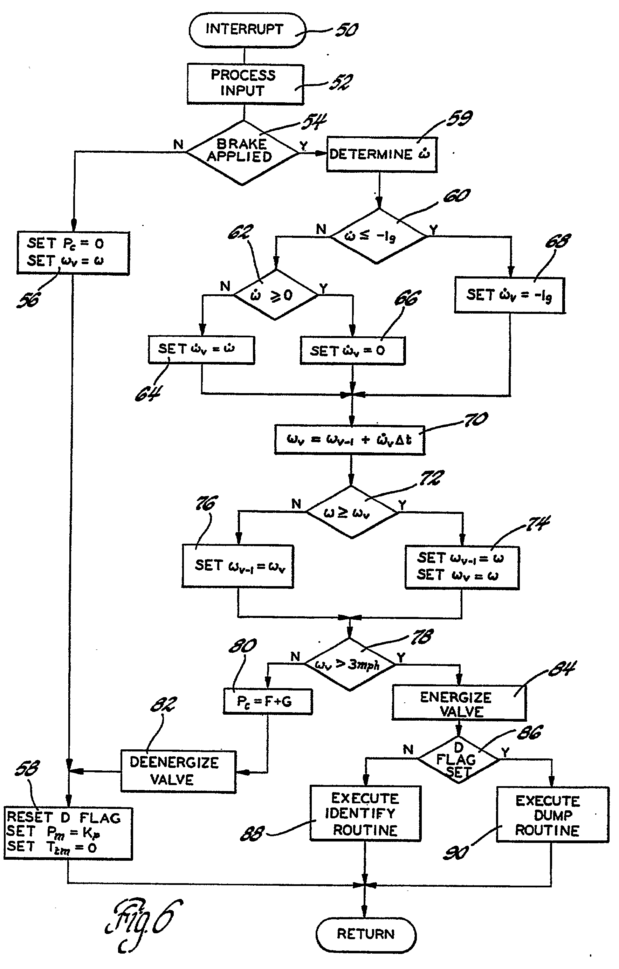

Referring to Figure 3, the actuator 12 in the preferred embodiment includes a DC torque motor 28 whose output shaft drives an input gear 30 which in turn rotatably drives an output gear 32. A drive member 34 of a ball screw actuator is secured for rotation with the output gear 32. The drive member 34 engages and axially positions a driven member 36 of the ball screw actuator. The driven member 36 drives a piston 38 to control the hydraulic pressure output of the actuator 12. In summary, the torque output of the DC torque motor 28 is translated to a directly related hydraulic brake pressure $P_b$ output of the actuator 12 that is applied to the brake 10.

The actuator 12 may also take other forms. For example, it may take the form of a duty cycle modulated solenoid having an armature applying a controlled force to the piston 38. Additionally, the DC torque motor 28 current may be used as a measure of the brake pressure $P_b$ in place of the pressure sensor 26 since the torque output of the DC torque motor 28 and therefore the hydraulic brake pressure $P_b$ is related to the motor current.

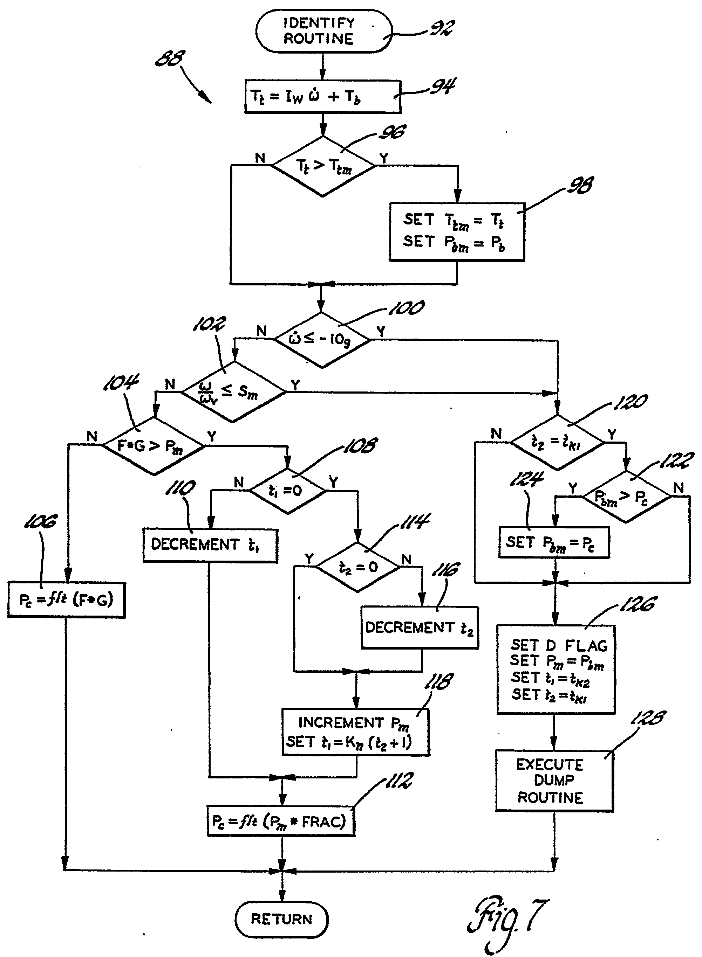

As specifically illustrated in Figure 4, the electronic controller 20 in the present embodiment takes the form of a digital computer 40 and a motor control circuit 41. The digital computer is standard in form and includes a central processing unit (CPU) which executes an operating program permanently stored in a read-only memory (ROM) which also stores tables and constants utilized in controlling the hydraulic brake pressure input to the brake 10. Contained within the CPU are conventional counters, registers, accumulators, flag flip flops, etc. along with a clock which provides a high frequency clock signal.

The digital computer 40 also includes a random access memory (RAM) into which data may be temporarily stored and from which data may be read at various address locations determined in accordance with the operating program stored in the ROM. A power control unit (PCU) receives battery voltage and provides regulated power to the various operating circuits in the electronic controller 20.

The digital computer 40 further includes an input/output circuit (I/O) that in turn includes a discrete output section controlled by the CPU to provide a control signal to the electromagnetic valve 18. In controlling the brake 10, the digital computer 40 outputs a digital signal to the motor control circuit 41 via the I/O representing a desired value of the hydraulic brake pressure. The motor control circuit 41 converts the digital signal representing the desired hydraulic brake pressure to an analogue signal which is compared with the actual measured value of the brake pressure $P_b$. By standard closed loop adjustment that may include both proportional and integral terms, the DC torque motor 28 current is controlled so that the actual measured brake pressure $P_b$ is made equal to the desired hydraulic brake pressure.

The I/O also includes an input counter section which receives a pulse output from the wheel speed sensor 24 having a frequency representing wheel speed $\omega$. Wheel speed $\omega$ is then determined by counting clock pulses between wheel speed pulses.

An analogue-to-digital unit (ADU) is included which provides for the measurement of analogue signals. The analogue signals representing conditions upon which the hydraulic brake pressure to the brake 10 is based are supplied to the ADU. In the present embodiment, those signals include the brake pressure $P_b$ from the pressure sensor 26 and the output of the brake pedal force sensor 22 providing a measure of the brake pedal force F. The analogue signals are sampled and converted under the control of the CPU and stored in ROM designated RAM memory locations.

The operation of the electronic controller 20 in controlling the brake pressure $P_b$ to the brake 10 in accordance with the principles of this invention is illustrated in the Figures 5-8. Referring first to Figure 5, when power is first applied to the anti-lock control apparatus such as when the vehicle ignition switch is rotated to its "on" position, the computer program is initiated at point 42 and then proceeds to a step 44 where the digital computer 40 provides for initialization. For example, at this step 44 initial values stored in the ROM are entered into ROM designated RAM memory locations and counters, flags and timers are initialized.

After the initialization step 44, the computer program proceeds to a step 46 where the computer program allows interrupts to occur and then to a step 48 where a background loop is continuously repeated. This background loop may include, for example, diagnostic routines. In the preferred embodiment of this invention, an interrupt is provided by the CPU at 5 millisecond intervals during which the routines for establishing the brake pressure $P_b$ are executed.

Referring to Figure 6, the five millisecond interrupt routine for controlling the brake 10 is illustrated. This interrupt routine is entered at step 50 and proceeds to a step 52 where the last measured wheel speed $\omega$ is saved and the new values of wheel speed $\omega$, brake pedal force F and brake pressure $P_b$ are read and stored in ROM designated RAM memory locations. Next, the computer program proceeds to a decision point 54 where it is determined whether or not the operator is commanding brake application. The brakes 10 are considered applied if the value of the brake pedal force F is greater than zero. If the brakes 10 are not applied, the computer program proceeds to a step 56 where a brake pressure command value $P_c$ is set equal to zero. Also at this step 56, the speed of the vehicle as represented by the speed $\omega_v$ of a hypothetical unbraked wheel is set equal to the wheel speed W measured at step 52. Since the brakes 10 are not applied, the wheel slip is substantially at zero so that the actual and hypothetical wheel speeds can be equated.

From step 56, the computer program proceeds to a step 58 where a D-flag is reset to condition the computer program to execute an identification routine (illustrated in Figure 7) which identifies the brake pressure producing the critical wheel slip value and therefore the maximum possible braking effort and which establishes the identified brake pressure following the sensing of an incipient wheel lockup condition. As will be described, the D-flag is set when an incipient wheel lockup condition is sensed to condition the computer program to execute a dump routine (illustrated in Figure 8) to release the brake pressure and allow the wheel speed to recover. Also at step 58, the maximum allowable brake pressure $P_m$ is set equal to a calibration constant $K_p$ such as 1500 psi and a RAM memory location storing the value of the maximum calculated tyre torque $T_{tm}$ is set equal to zero. Thereafter, the computer program exits the 5 millisecond interrupt routine and returns to the background loop of step 48 of Figure 5.

The foregoing steps 52, 56, and 58 and decision point 54 are continuously repeated at 5 millisecond intervals as long as the vehicle operator does not command brake application. However, when a brake pedal force F is applied to the brake pedal 16, the computer program proceeds from decision point 54 to a series of steps that provide an estimation of the value of vehicle speed $\omega_v$ as represented by the speed of a hypothetical unbraked wheel. It is noted that the initial value of vehicle speed $\omega_v$ was set equal to the actual wheel speed $\omega$ at step 56 prior to operation of the brake pedal 16. This series of steps begins at step 59 where the rate of change in wheel speed (wheel acceleration) $\dot{\omega}$ is determined from the old value of wheel speed saved at step 52 and the new value stored at step 52. The determined wheel acceleration $\dot{\omega}$ is then compared with a constant deceleration of 1g at decision point 60. The constant deceleration of 1g represents the maximum possible vehicle deceleration. When wheel deceleration is less than 1g (that is, wheel acceleration $\dot{\omega}$ is greater than -1g), it is assumed that the vehicle is decelerating at the same rate as the wheel 11. If, however, the wheel deceleration exceeds 1g (that is, $\dot{\omega}$ is less than -1g), it is assumed that the vehicle deceleration remains at the maximum value of 1g.

If the wheel deceleration is less than 1g (that is $\dot{\omega}$ is greater than -1g), the computer program proceeds from decision point step 60 to a decision point 62 where $\dot{\omega}$ is compared to zero. If the comparison indicates wheel deceleration (that is, $\dot{\omega}$ is a negative number), the computer program proceeds to step 64 where a rate of change of vehicle speed $\dot{\omega}_v$ is set equal to the actual measured rate of change of wheel speed $\dot{\omega}$. If, however, the comparison at decision point 62 indicates no change in wheel speed or wheel acceleration (that is, $\dot{\omega}$ is equal to or greater than zero) the computer program proceeds to a step 66 where the rate of change of vehicle speed $\dot{\omega}_v$ is set equal to zero.

Returning to step 60, if it is determined that the wheel deceleration is 1g or greater (that is, $\dot{\omega}$ is less than or equal to -1g), the computer program proceeds to a step 68 where $\dot{\omega}_v$ is set equal to the maximum possible vehicle deceleration of 1g.

From the respective steps 64, 66 or 68, the computer program proceeds to a step 70 where vehicle speed $\omega_v$ is estimated. This estimation is based on an initial vehicle speed $\omega_{v-l}$ determined during the previous execution of the interrupt routine and the rate of change of vehicle speed $\dot{\omega}_v$ determined at step 64, 66 or 68 over the five millisecond interval $\Delta t$ between interrupt periods.

From step 70, the computer program proceeds to decision point 72 where the actual wheel speed $\omega$ measured at step 52 is compared to the vehicle speed $\omega_v$ determined at step 70. If the wheel speed $\omega$ is equal to or greater than the vehicle speed $\omega_v$ (which cannot occur during braking of the wheel), the value of vehicle speed is corrected at step 74 by setting the vehicle speed $\omega_v$ equal to wheel speed $\omega$ and the initial vehicle speed $\omega_{v-l}$ (to be used at step 70 in the next execution of the interrupt routine) is set equal to wheel speed $\omega$. If at decision point 72 the wheel speed $\omega$ is determined to be less than the vehicle speed $\omega_v$, the computer program proceeds to a step 76 where the initial vehicle speed $\omega_{v-l}$ to be used at step 70 during the next execution of the interrupt routine set equal to the value of vehicle speed $\omega_v$ determined at step 70.

Following step 74 or step 76, the computer program proceeds to a decision point 78 where the vehicle speed is compared to a calibration constant such as 3 mph. If the vehicle speed is less than 3 mph, the computer program proceeds to a step 80 where the brake pressure command value $P_c$ is set equal to the value of the brake pedal force F times the gain constant G for providing power assisted braking. Thereafter, the computer program proceeds to a step 82 where the electromagnetic valve 18 of Figure 2 is deenergized, and then to the step 58 previously described.

If the vehicle speed is greater than 3 mph, the computer program proceeds from decision point 78 to step 84 where the electromagnetic valve 18 is energized to decouple the master cylinder 14 from the actuator 12. Brake application is thereafter provided solely via the actuator 12 as controlled by the electronic controller 20. From step 84, the computer program proceeds to a decision point 86 where the state of the D-flag is sampled. If the D-flag is reset to condition the computer program to execute the identify routine, the computer program proceeds to a step 88 where the identify routine (Figure 7) is executed.

If decision point step 86 determines that the D-flag is set, the computer program is conditioned to execute a dump routine (Figure 8), and the computer program proceeds to a step 90 where the dump routine is executed. During this dump routine, the pressure to the brake 10 is released to allow the speed of the wheel 11 to recover from an incipient wheel lockup condition. Following the steps 88 or 90, the computer program exits the 5 millisecond interrupt routine of Figure 6 and returns to the background loop of step 48 of Figure 5.

Referring to Figure 7, the identify routine of step 88 of Figure 6 is illustrated. This identity routine (A) provides for power assisted braking, (B) identifies the brake line pressure producing the critical wheel slip corresponding to the maximum possible braking force between the tyre and the road surface, (C) senses an incipient wheel lockup condition and conditions the computer program to execute the dump routine (Figure 8) to allow wheel recovery from the lockup condition, (D) reestablishes the brake pressure to the identified pressure producing the critical wheel slip value and (E) adaptively reduces the brake pressure until a stable braking pressure is identified if the pressure originally identified results in unstable braking due to apparatus parameter changes.

The identify routine is entered at point 92 and proceeds to a step 94 where the value of the tyre torque $T_t$ (which is related to the braking force) is calculated in accordance with the equation (4) (above) from the wheel acceleration $\dot{\omega}$ determined at step 59, the brake pressure $P_b$ measured at step 52, and the known values of wheel moment of inertia $I_w$ and brake gain $K_b$. Step 94 defines monitoring means for monitoring the braking force tending to accelerate the wheel during the application of brake pressure. From step 94, the computer program proceeds to decision point 96 and step 98 that function to identify the brake pressure producing the maximum value of tyre torque. At step 96, the tyre torque $T_t$ calculated at step 94 is compared with the previously calculated, maximum calculated tyre torque $T_{tm}$ stored in memory. If the tyre torque $T_t$ calculated at step 94 is greater than the stored maximum calculated tyre torque $T_{tm}$, the computer program proceeds to a step 98 where the stored maximum calculated tyre torque $T_{tm}$ is set equal to the larger value calculated at step 94. Also at this step, a stored value of brake pressure $P_{bm}$ is set equal to the brake pressure $P_b$ measured at step 52. Therefore, the stored value of brake pressure $P_{bm}$ represents the brake pressure corresponding in time to the maximum calculated of tyre torque $T_{tm}$ stored at step 98. Decision point 96 and step 98 define storing means for storing the value of brake pressure corresponding in time to the maximum brake force monitored following each application of brake pressure.

The foregoing sequence of decision point 96 and step 98 are repeated with each execution of the identify routine as long as the tyre torque $T_t$ is increasing so that the brake pressure $P_t$ resulting in the maximum calculated tyre torque $T_{tm}$ is always known. If decision point 96 should determine that the tyre torque $T_t$ is less than the stored maximum calculated tyre torque $T_{tm}$, step 98 is bypassed. This will occur when the brake pressure $P_b$ results in a wheel slip value that exceeds the critical wheel slip value which in turn results in a decrease in the tyre torque. The stored value of brake pressure $P_{bm}$ then represents the brake pressure establishing the critical wheel slip value and therefore the maximum braking effort. As will be described, this stored value of brake pressure $P_{bm}$ is utilized, after an incipient wheel lock condition is detected, to reestablish a braking condition that produces substantially the critical wheel slip value.

The computer program next determines whether or not an incipient wheel lock condition exists as represented by excessive wheel deceleration or excessive wheel slip. At decision point 100, the rate of change in wheel speed (wheel acceleration $\dot{\omega}$) determined at step 59 is compared with a deceleration reference value such as 10g which, if exceeded (that is, $\dot{\omega}$ is less than or equal to -10g), indicates that braking has become unstable and an incipient wheel lockup condition exists. If step 100 does not detect an incipient wheel lockup condition, the computer program proceeds to decision point 102 where the ratio $\omega/\omega_v$ is compared with a reference value $S_m$ which represents a wheel slip value that exceeds the largest possible critical wheel slip value for any road surface condition. A ratio less than reference value $S_m$ indicates that braking has become unstable and an incipient wheel lockup condition exists. Decision points 100,102 define detecting means for detecting an incipient wheel lockup condition.

If neither of the decision points 100 and 102 detects an incipient wheel lockup condition, the computer program proceeds to a decision point 104 where the value of the operator requested brake pressure that is equal to the brake pedal force F times the gain factor G is compared with a maximum allowable brake pressure $P_m$. If the product (F × G) is less than the maximum allowable brake pressure $P_m$, the computer program proceeds to a step 106 where the brake pressure command value $P_c$ is adjusted toward the operator requested brake pressure in accordance with a first order lag filter equation (new value of $P_c$ = old value pf $P_c$ + [$P_m$ - old value of $P_c$] / a time constant) to provide power assisted braking. Step 106 defines setting means for setting the brake pressure command value in accordance with the operated requested brake pressure when the operated requested brake pressure is less than the maximum allowable brake pressure. Thereafter, the computer program exits the identify routine and returns to the background loop of step 48 of Figure 5.

If at decision point 104 it is determined that the operator requested brake pressure is greater than the maximum allowable brake pressure $P_m$, the computer program proceeds to a pressure ramp routine where, through repeated executions of the identify routine, the maximum allowable brake pressure $P_m$ and the brake pressure command value $P_c$ are ramped up until decision point 104 detects that the maximum allowable brake pressure $P_m$ has become greater than the operator requested brake pressure or (if the operator requested brake pressure results in an unstable braking condition) until the brake pressure commanded value $P_c$ results in an incipient wheel lockup condition at which time the brake pressure establishing the critical wheel slip value has been identified by the decision point 96 and step 98. As will be described, the brake pressure so identified is then used to reestablish the brake pressure command value after the wheel recovers from the incipient wheel lockup condition. The result of the ramping of the brake pressure is a periodic low frequency (such as 2 Hz) reidentification of the brake pressure producing the critical wheel slip value. This enables the anti-lock control apparatus to adapt to increasing values of the brake friction coefficient resulting from changes in the tyre-road surface interface.

The pressure ramp routine for ramping the brake pressure begins at a decision point 108 where the value of a time $t_1$ in a RAM timing register is compared to zero. The initial value of time $t_1$ establishes a delay in the ramping of the brake pressure command value $P_c$. Thereafter, the time $t_1$ functions in establishing the ramp rate. If the time $t_1$ is greater than zero, the computer program proceeds to a step 110 where the time $t_1$ is decremented. Thereafter, at step 112, the computer program proceeds to adjust the brake pressure command value $P_c$ toward a predetermined fraction of the maximum allowable brake pressure $P_m$ in accordance with a first order lag filter equation (which may be different from that used in step 106 - the time constant may be different). By setting the maximum allowable brake pressure $P_m$ to the stored value of brake pressure $P_{bm}$ after an incipient wheel lockup condition is sensed (as will be described), the brake pressure command value $P_c$ established at step 112 will be the predetermined fraction of the pressure producing the critical wheel slip value. In one embodiment, the predetermined fraction is 0.9 so that the resultant brake pressure produces substantially the critical wheel slip value. Decision point 108 and steps 110,112 define reapplying means for reapplying the brake pressure following a detected incipient wheel lockup condition to a value that is a predetermined fraction of the last stored value of brake pressure.

As long as an incipient wheel lock condition is not detected and the operator requested brake pressure is greater than the maximum allowable brake pressure $P_m$, the decision point 108 and steps 110 and 112 are repeated at the five millisecond interrupt interval until $t_1$ has been decremented to zero. After $t_1$ has been decremented to zero, the computer program proceeds from decision point 108 to decision point 114 where a time $t_2$ in a RAM timing register is compared to zero. If the time $t_2$ is greater than zero, the computer program proceeds to a step 116 where the time $t_2$ is decremented.

Following step 116 or decision point 114, the computer program proceeds to a step 118 where the maximum allowable brake pressure $P_m$ is incremented and the time $t_1$ is set equal to $K_n(t_2+1)$, where $K_n$ is a calibration value. Thereafter, the decision point 114 and steps 116 and 118 will be bypassed upon repeated executions of the identify routine until $t_1$ is again decremented to zero. From this it can be seen that the maximum allowable brake pressure $P_m$ is periodically incremented at intervals determined by $K_n$ and $t_2$. When time $t_2$ is decremented to zero, the maximum allowable brake line pressure $P_m$ is incremented with each $K_n$ execution of the identify routine. Decision point 114 and steps 116, 118 define ramping means for ramping the maximum allowable brake pressure at a predetermined rate when the operator requested brake pressure is greater than the maximum allowable brake pressure.

Following step 118, the computer program proceeds to step 112 where the brake pressure command value $P_c$ is again set as previously described. Repeated executions of the foregoing steps function to increase the brake pressure command value $P_c$ exponentially. This increase will be continued until (A) an incipient wheel lock condition is forced so as to force a reidentification of the brake pressure producing the critical wheel slip value via the decision point 96 and step 98 or (B) the operator requested brake pressure becomes less than the maximum allowable brake pressure $P_m$.

If the brake pressure command value $P_c$ is increased to a point resulting in the wheel slip value becoming greater than the critical wheel slip value, the wheels then quickly approach a lockup condition. This incipient wheel lock condition is detected as previously described at decision point 100 or decision point 102. When the incipient wheel lockup condition is detected, the stored value of brake pressure $P_{bm}$ in memory at that time is the brake pressure producing the critical wheel slip value and therefore the maximum possible tyre torque.

After an incipient wheel lockup condition has been sensed, the computer program proceeds to a decision point 120 where the time $t_2$ is compared with a constant $t_{k1}$. As will be seen, these two values will be equal only if an incipient wheel lockup condition is sensed within a predetermined time $t_{k2}$ (such as 500ms) after the brake pressure is reestablished after recovery from an incipient wheel lockup condition. A wheel lockup occurring within this period (predetermined time $t_{k2}$) after reapplication of the brake pressure implies the application of an unstable brake pressure producing an incipient wheel lockup condition. If this condition exists, the computer program proceeds to a decision point 122 where the stored value of brake pressure $P_{bm}$, stored at step 98 and identified as the brake pressure establishing the critical wheel slip value, is compared with the brake pressure command value $P_c$ which resulted in the incipient wheel lockup condition. If greater, the computer program proceeds to a step 124 where the stored value of brake pressure $P_{bm}$ is corrected to the brake pressure command value $P_c$. This condition represents an error in the calculation of the tyre torque either through changes in the brake line coefficients or errors in various constants used in the determination of the calculation of the tyre torque $T_t$. Since the brake pressure producing the critical wheel slip value can never be greater than the brake pressure command value $P_c$ that resulted in an incipient wheel lock condition, the stored value of brake pressure $P_{bm}$ is reduced to the brake pressure command value $P_c$ causing the incipient wheel lock condition.

From decision point 120 if the time $t_2$ is not equal to constant $t_{k1}$, from decision point 122 if $P_{bm}$ is less than $P_c$, or from step 124, the computer program proceeds to a step 126 where the D-flag is set to condition the computer program to execute the dump routine (Figure 8) and certain initial conditions for reapplication of brake pressure are established. The initial conditions include setting the maximum allowable brake pressure $P_m$ equal to the stored value of brake pressure $P_{bm}$ (the brake pressure identified as producing the critical wheel slip value), setting the time $t_1$ equal to the predetermined time $t_{k2}$ and setting the time $t_2$ equal to the constant $t_{k1}$. The computer program next proceeds to a step 128 where the dump routine (Figure 8) is executed. Steps 126, 128 define responsive means responsive to a detected incipient wheel lock up condition. Thereafter, during executions of the 5ms interrupt routine of Figure 6, the identify routine (Figure 7) is bypassed via the decision point 86 and the dump routine of step 90 is executed until the D-flag is again reset. Steps 90 and 128 define releasing means for releasing the brake pressure in response to the sensed incipient wheel lockup condition to allow wheel speed recovery.

The dump routine executed at step 128 of the identify routine of Figure 7 and at step 90 of the interrupt routine of Figure 6 is illustrated in Figure 8. This dump routine is entered at point 130 and proceeds to decision point 132 where wheel slip represented by the ratio of wheel speed $\omega$ to the vehicle speed $\omega_v$ of the hypothetical unbraked wheel is compared to a constant $S_k$ representing wheel speed approaching vehicle speed. Constant $S_k$ may be, for example, 0.9 representing a wheel slip of 10 percent. If the ratio is less than constant $S_k$, the computer program proceeds to a step 134 where the brake pressure command value $P_c$ is set to zero to allow the wheel speed $\omega$ to recover from the incipient wheel lockup condition and toward vehicle speed $\omega_v$. When decision point 132 detects wheel speed recovery, the computer program proceeds from decision point 132 to a step 136 where the D-flag is reset to condition the computer program to execute the identify routine of Figure 7. Also at this step 136, the maximum calculated tyre torque $T_{tm}$ is set to zero so that the identify routine (Figure 7) is conditioned to reidentify the brake pressure establishing the critical wheel slip value. The computer program then exits the dump routine of Figure 8 and returns to the background loop of step 48 of Figure 5.

During the following executions of the 5 millisecond interrupt routine of Figure 6, the computer program executes the identify routine (Figure 7) at step 88 until the D-flag is again set at step 126 after an incipient wheel lockup condition is sensed.

A brief summary of operation will now be described. At step 58 prior to the operator applying the vehicle brakes and at step 136 prior to brake pressure being reapplied after being released by the dump routine of Figure 8, the stored maximum calculated tyre torque $T_{tm}$ is set to zero so that prior to each application of brake pressure, the identify routine (Figure 7) is conditioned to identify the brake pressure corresponding in time to the maximum calculated tyre torque $T_{tm}$.

First it is assumed that there are no errors in the coefficients and values used in the calculation of tyre torque $T_t$ in step 94 and that the tyre-road surface interface conditions do not change during braking. As the brake pressure command value $P_c$ is increased via decision point 104 and step 106 or ramped up via the decision point 104 and decision points/steps 108 through 118, the stored value of brake pressure $P_{bm}$ is continually updated with each increasing calculated value of tyre torque.

When an incipient wheel lockup condition is sensed at decision point 100 or 102, the stored value of brake pressure $P_{bm}$ is the brake pressure that resulted in the wheel slip value being at the critical wheel slip value and which produced the maximum possible braking effort for the existing tyre-road interface condition. The stored value of brake pressure $P_{bm}$ is unaffected by decision points 120, 122 and step 124 since there were no errors in the calculated value of tyre torque so that the stored value of brake pressure $P_{bm}$ could never exceed the brake pressure command value $P_c$. The maximum allowable brake pressure $P_m$ is then set equal to the stored value of brake pressure $P_{bm}$ at step 126.

The D-flag is then set at step 126 after which the dump routine of Figure 8 is repeated during each 5ms interrupt to release the brake pressure to allow the wheel speed to recover. When the wheel speed has recovered, the D-flag is reset at step 136 so that the identify routine (Figure 7) is then executed during each 5ms interrupt. When executed, the identify routine (Figure 7) reapplies the brake pressure at step 112 to the predetermined fraction of the maximum allowable brake pressure $P_m$. Recalling that the maximum allowable brake pressure $P_m$ was set equal to the stored value of brake pressure $P_{bm}$ that established the critical wheel slip value, the brake pressure $P_b$ reapplied is the predetermined fraction of the brake pressure establishing the critical wheel slip value. Since the fraction, which provides the adaptive feature of this invention, is typically large, such as 0.9, the brake pressure $P_b$ reapplied results in stable braking while at a wheel slip value substantially equal to the critical wheel slip value. After the predetermined time $t_{k2}$ (the initial value of time $t_1$ set at step 126) which is typically 500ms, the brake pressure $P_b$ is slowly ramped until an incipient wheel lock condition is again detected. While the brake pressure $P_b$ is being reapplied and thereafter ramped, the decision point 96 and step 98 are functioning to reidentify and store the brake pressure producing the critical wheel slip value.

The foregoing cycle is continually repeated as long as the operator requested pressure is greater than the maximum allowable brake pressure $P_m$. The cycle time is slow (less than 2 Hz) so that the wheel slip value is substantially continuously controlled at the critical wheel slip value.

If the road surface friction coefficient should increase while the brake pressure is being limited to prevent wheel lockup, the anti-lock control apparatus automatically adapts to the change via the brake pressure ramp-up function provided by the decision points/steps 108 through 118. By ramping the brake pressure $P_b$, the anti-lock control apparatus is caused to reidentify the brake pressure producing the critical wheel slip value and in so doing, adapts to the change in the tyre-road surface interface.

If the road surface friction coefficient should decrease while the brake pressure $P_b$ is being limited to prevent wheel lockup, the brake pressure command value $P_c$ becomes excessive resulting in the wheel decelerating toward lockup. This incipient wheel lockup condition is sensed at decision point 100 or 102 and the brake pressure released and subsequently reapplied as previously described. During reapplication of the brake pressure, decision point 96 and step 98 will reidentify the brake pressure producing the maximum calculated braking effort for the new tyre-road surface interface condition as the wheel decelerates again toward lockup. This brake pressure (reduced by the fraction at step 112) is then applied as previously described after the brake pressure is next released in response to the sensed incipient wheel lockup condition.

The operation of the anti-lock control apparatus in adapting to errors in the identification of the brake pressure establishing the critical wheel slip value will now be described. Over a period of time, changes may occur in the parameters that could result in an unstable brake pressure being identified as the brake pressure establishing the critical wheel slip value. When this brake pressure is then applied after the wheel 11 has recovered, the wheel immediately begins to decelerate toward lockup. Without correction, the brake pressure would rapidly cycle between pressure release and pressure apply. One of the apparatus parameters that may change over time to produce the above result is the brake gain $K_b$ used in calculating brake torque $T_b$ in equation (4) above. This brake gain $K_b$ is affected, for example, by changes in the coefficient of friction of the brake linings in the brake 10.

By setting the maximum allowable brake pressure $P_m$ equal to the stored value of brake pressure $P_{bm}$ at step 126 and, after wheel speed recovery, by setting the brake pressure command value $P_c$ to the predetermined fraction of the maximum allowable brake pressure $P_m$, the brake pressure command value $P_c$ will be repeatedly stepped down by the fraction as the anti-lock control apparatus cycles between brake pressure release and pressure apply until the brake pressure command value $P_c$ becomes equal to or less than the value producing the critical wheel slip value. For example, if the predetermined fraction of the value of the stored value of brake pressure $P_{bm}$ stored by the identify routine (Figure 7) is an unstable brake pressure due to errors such as above described, the resulting brake pressure command value $P_c$ established at step 112 will cause an incipient wheel lockup condition at least within the delay period of predetermined time $t_{k2}$ previously described. The stored value of brake pressure $P_{bm}$ at the time the incipient wheel lockup condition is sensed cannot be greater than the brake pressure command value $P_c$. Therefore, the maximum allowable brake pressure $P_m$ set at step 126 is less than the prior maximum allowable brake pressure by at least the amount determined by the predetermined fraction. When the wheel speed has recovered via the dump routine (Figure 8), the new brake pressure command value $P_c$ is set to the predetermined fraction of the new value of the maximum allowable brake pressure $P_m$. This new brake pressure command value $P_c$ is therefore at least less than the value of the brake pressure command value $P_c$ in the prior cycle by an amount determined by the predetermined fraction. If the new brake pressure command value $P_c$ is still an unstable pressure, the cycle will be repeated until the brake pressure command value has been repeatedly reduced by the fraction to a stable pressure that establishes substantially the critical wheel slip value.

The decision point 122 and step 124 further function to reduce the brake pressure reapplied in any cycle where the relationship between the stored value of brake pressure $P_{bm}$ and the brake pressure command value $P_c$ represents an unstable brake pressure condition. Once a stable pressure has been identified by the above sequence, the anti-lock control apparatus will not cycle again until expiration of the time period of predetermined time $t_{k2}$ via decision point 108 and step 110 and thereafter the brake pressure command value $P_c$ is ramped to an unstable pressure by the decision points steps 108 through 118 to force a reidentification of the brake pressure producing the critical wheel slip value.

This invention therefore provides an anti-lock control apparatus that establishes substantially optimum braking effort without rapid cycling of brake pressure, and that automatically adjusts to changes in the apparatus over time.

## Claims

1. An anti-lock control apparatus for a brake (10) of a wheel (11) of a vehicle for limiting the brake pressure applied to the brake, comprising detecting means (100, 102) for detecting an incipient wheel lockup condition; releasing means (90, 128) for releasing the brake pressure in response to the detected incipient wheel lockup condition to allow wheel speed recovery; and reapplying means (108-112) for reapplying the brake pressure following a detected incipient wheel lockup condition; characterised by monitoring means (94) for monitoring the braking force tending to accelerate the wheel during the application of brake pressure; by storing means (96, 98) for storing the value of brake pressure corresponding in time to the maximum brake force monitored following each application of brake pressure; and in that the reapplying means reapplies the brake pressure to a value that is a predetermined fraction of the last stored value of brake pressure, whereby the brake pressure is lowered by the predetermined fraction each time the reapplied brake pressure results in an incipient wheel lockup condition until a stable brake pressure is reapplied which establishes substantially the maximum possible braking force.

2. An anti-lock control apparatus as claimed in Claim 1, characterised in that the reapplying means (108-112) reapplies the brake pressure following wheel speed recovery.

3. An anti-lock control apparatus as claimed in Claim 1 or Claim 2 characterised by applying means (12, 14, 20) for applying the brake pressure at a value in accordance with a vehicle operator brake command.

4. An anti-lock control apparatus as claimed in Claim 3, characterised in that the applying means (12, 14, 20) applies brake pressure in accordance with a brake pressure command value; by setting means (106) for setting the value in accordance with an operator requested brake pressure when the operator requested brake pressure is less than a maximum allowable brake pressure; in that the reapplying means (108-112) sets the brake pressure command value in accordance with a predetermined fraction of the maximum allowable brake pressure when the operator requested brake pressure is greater than the maximum allowable brake pressure; by ramping means (114-118) for ramping the maximum allowable brake pressure at a predetermined rate when the operator requested brake pressure is greater than the maximum allowable brake pressure; and by responsive means (126, 128) responsive to a detected incipient wheel lockup condition for disabling the applying means, for setting the maximum allowable brake pressure to the last stored value of brake pressure, and for enabling the releasing means (90, 128) to release the wheel brake pressure to allow wheel speed recovery from an incipient wheel lockup condition; the reapplying means disabling the releasing means and enabling the applying means.

5. A method of operating an anti-lock control apparatus for a brake (10) of a wheel (11) of a vehicle comprising detecting an incipient wheel lockup condition; releasing the brake pressure in response to the detected incipient wheel lockup condition to allow wheel speed recovery; and reapplying the brake pressure following a detected incipient wheel lockup condition; characterised by monitoring the braking force tending to accelerate the wheel during the application of brake pressure; storing the value of brake pressure corresponding in time to the maximum brake force monitored following each application of brake pressure; and in that the brake pressure is reapplied to a value that is a predetermined fraction of the last stored value of brake pressure.

## Patentansprüche

1. Antiblockier-Steuervorrichtung für eine Bremse (10) eines Fahrzeugrades (11) zur Begrenzung des an die Bremse angelegten Bremsdrucks, mit Erfassungsmitteln (100, 102) zum Erfassen eines beginnenden Radblockierzustandes; Lösemitteln (90, 128) zum Lösen des Bremsdruckes in Reaktion auf den erfaßten beginnenden Radblockierzustand, um eine Raddrehzahl-Wiederherstellung zuzulassen; und Wiederanlegemitteln (108-112) um nach einem erfaßten beginnenden Radblockierzustand den Bremsdruck wieder anzulegen; gekennzeichnet durch Überwachungsmittel (94) zum Überwachen der Bremskraft, die Geschwindigkeitsänderung des Rades zu erreichen tendiert, während des Anlegens des Bremsdruckes; durch Speichermittel (96, 98) zum Speichern des zeitlich der maximalen überwachten Bremskraft entsprechenden Bremsdruckwertes nach jeder Anwendung von Bremsdruck; und dadurch, daß das Wiederanlegemittel den Bremsdruck bis zu einem Wert wieder anlegt, der eine vorbestimmte Fraktion des zuletzt gespeicherten Bremsdruckwertes ist, wodurch der Bremsdruck jedesmal auf die vorbestimmte Fraktion erniedrigt wird, wenn der wieder angelegte Bremsdruck zu einem beginnenden Radblockierzustand führt, bis ein stabiler Bremsdruck wieder angelegt ist, der im wesentlichen die maximal mögliche Bremskraft aufbaut.

2. Antiblockier-Steuervorrichtung nach Anspruch 1, dadurch gekennzeichnet, daß das Wiederanlegemittel (108-112) den Bremsdruck nach jeder Wiederherstellung der Raddrehzahl wieder anlegt.

3. Antiblockier-Steuervorrichtung nach Anspruch 1 oder 2, gekennzeichnet durch Anlegemittel (12, 14, 20) zum Anlegen des Bremsdruckes mit einem Wert entsprechend einem Bremsbefehl der Fahrzeug-Bedienungsperson.

4. Antiblockier-Steuervorrichtung nach Anspruch 3, dadurch gekennzeichnet, daß das Anlegemittel (12, 14, 20) Bremsdruck entsprechend einem Bremsdruck-Befehlswert anlegt; daß Einstellmittel (106) vorgesehen sind zum Einstellen des Wertes entsprechend einem von der Bedienungsperson angeforderten Bremsdruck, wenn der von der Bedienungsperson angeforderte Bremsdruck geringer als ein maximal zulässiger Bremsdruck ist; daß das Wiederanlegemittel (108-112) den Bremsdruck-Befehlswert entsprechend einer vorbestimmten Fraktion des maximal zulässigen Bremsdrucks einstellt, wenn der von der Bedienungsperson angeforderte Bremsdruck größer als der maximal zulässige Bremsdruck ist; durch Ansteigemittel (114-118), um den maximal zulässigen Bremsdruck mit einer vorbestimmten Rate ansteigen zu lassen, wenn der von der Bedienungsperson angeforderte Bremsdruck größer als der maximal zulässige Bremsdruck ist; und durch Ansprechmittel (126, 128), die auf einen erfaßten beginnenden Radblockierzustand ansprechen zum Sperren des Anlegemittels, zum Einstellen des maximal zulässigen Bremsdrucks auf den zuletzt gespeicherten Bremsdruckwert und zum Freigeben des Lösemittels (90, 128) zum Lösen des Radbremsdrucks, um eine Wiederherstellung der Raddrehzahl von einem beginnenden Radblockierzustand aus zuzulassen; wobei das Wiederanlegemittel das Lösemittel sperrt und das Anlegemittel freigibt.

5. Verfahren zum Betreiben einer Antiblockier-Steuervorrichtung für eine Bremse (10) eines Fahrzeugrades (11) mit Erfassen eines beginnenden Radblockierzustandes; Lösen des Bremsdrucks in Reaktion auf den erfaßten beginnenden Radblockierzustand, um eine Wiederherstellung der Raddrehzahl zuzulassen; und Wiederanlegen des Bremsdrucks nach einem erfaßten beginnenden Radblockierzustand; dadurch gekennzeichnet, daß die zu einer Geschwindigkeitsänderung des Rades tendierende Bremskraft während des Anlegens des Bremsdrucks überwacht wird; daß der zeitlich der maximalen überwachten Bremskraft entsprechende Bremsdruckwert nach jedem Anlegen von Bremsdruck gespeichert wird; und daß der Bremsdruck bis zu einem Wert wieder angelegt wird, der eine vorbestimmte Fraktion des zuletzt gespeicherten Bremsdruckwertes ist.

**Revendications**

1. Appareil de commande anti-blocage pour un frein (10) d'une roue (11) d'un véhicule, destiné à limiter la pression de freinage appliquée au frein, comportant des moyens de détection (100, 102) destinés à détecter une condition de blocage naissant de la roue; des moyens de libération (90, 128) destinés à libérer la pression de freinage en réponse à la condition détectée de blocage naissant de la roue pour permettre la récupération de la vitesse de la roue; et des moyens de nouvelle application (108, 112) destinés à appliquer à nouveau la pression de freinage après une condition détectée de blocage naissant de la roue; caractérisé par des moyens de contrôle (94) destinés à contrôler la force de freinage tendant à accélérer la roue pendant l'application de la pression de freinage; par des moyens de mémorisation (96, 98) destinés à mémoriser la valeur de la pression de freinage correspondant dans le temps à la force de freinage maximale contrôlée après chaque application de la pression de freinage; et en ce que les moyens de nouvelle application appliquent à nouveau la pression de freinage à une valeur qui est une fraction prédéterminée de la dernière valeur mémorisée de la pression de freinage, de manière que la pression de freinage soit abaissée de la fraction prédéterminée chaque fois que la pression de freinage appliquée à nouveau conduit à une condition de blocage naissant de la roue jusqu'à ce qu'une pression de freinage stable soit appliquée à nouveau, qui établit pratiquement la force de freinage maximale possible.

2. Appareil de commande anti-blocage selon la revendication 1, caractérisé en ce que les moyens de nouvelle application (108–112) appliquent à nouveau la pression de freinage après la récupération de vitesse de la roue.

3. Appareil de commande anti-blocage selon la revendication 1 ou la revendication 2, caractérisé par des moyens d'application (12, 14, 20) destinés à appliquer la pression de freinage à une valeur en fonction d'une commande de freinage du conducteur du véhicule.

4. Appareil de commande anti-blocage selon la revendication 3, caractérisé en ce que les moyens d'application (12, 14, 20) appliquent la pression de freinage en fonction d'une valeur de commande de pression de freinage; par des moyens de réglage (106) destinés à régler la valeur en fonction d'une pression de freinage demandée par le conducteur quand le conducteur a demandé une pression de freinage inférieure à une pression de freinage maximale permise; en ce que les moyens de nouvelle application (108–112) établissent la valeur de commande de pression de freinage en fonction d'une fraction prédéterminée de la pression de freinage maximale permise quand la pression de freinage demandée par le conducteur est supérieure à la pression de freinage maximale permise; par des moyens de croissance (114–118) destinés à faire croître la pression de freinage maximale permise à un taux prédéterminé quand la pression de freinage demandée par le conducteur est supérieure à la pression de freinage maximale permise; et par des moyens (126, 128) réagissant à une condition détectée de blocage naissant de roue en inhibant les moyens d'application pour régler la pression de freinage maximale permise sur la dernière valeur mémorisée de la pression de freinage et pour autoriser les moyens de libération (90, 128) à libérer la pression de freinage de roue afin de permettre la récupération de la vitesse de la roue à partir d'une condition de blocage naissant de la roue; les moyens de nouvelle application inhibant les moyens de libération et autorisant les moyens d'application.

5. Procédé de fonctionnement d'un appareil de commande anti-blocage pour un frein (10) d'une roue (11) d'un véhicule, comportant la détection d'une condition de blocage naissant de roue; la libération de la pression de freinage en réponse à la condition détectée de blocage naissant de roue pour permettre la récupération de vitesse de la roue; et la nouvelle application de la pression de freinage après une condition détectée de blocage naissant de la roue; caractérisé en ce qu'il consiste aussi à contrôler la force de freinage tendant à accélérer la roue pendant l'application de la pression de freinage; à mémoriser la valeur de la pression de freinage correspondant dans le temps à la force de freinage maximale contrôlée après chaque application de la pression de freinage; et en ce que la pression de freinage est appliquée à nouveau à une valeur qui est une fraction prédéterminée de la dernière valeur mémorisée de la pression de freinage.

EP 0 223 358 B1

Fig.1

Fig.2

Fig.3

CPU | RAM | ROM

ω → I/O | PCU | ADU

← $P_b$
← F

_40_

BATTERY

VALVE

$P_c$
$P_b$

MOTOR
CONTROL
CIRCUIT

_41_

→ MOTOR

_20_

*Fig. 4*

POWER
UP

_42_

INITIALIZATION

_44_

ALLOW
INTERRUPT

_46_

BACKGROUND
LOOP

_48_

*Fig. 5*

DUMP
ROUTINE

_130_

_132_

$\frac{\dot{\omega}}{\omega} \geq S_K$

N

Y

_134_

SET $P_c = 0$

_136_

RESET D FLAG
SET $T_{km} = 0$

RETURN

*Fig. 8*

*Fig.6*

IDENTIFY ROUTINE — *92*

*88*

$T_t = I_w \dot{\omega} + T_b$ — *94*

*96* $T_t > T_{tm}$ — N / Y

SET $T_{tm} = T_t$
SET $P_{bm} = P_b$ — *98*

*100* $\dot{\omega} \leq -10_g$ — N / Y

*102* $\dfrac{\dot{\omega}}{\dot{\omega}_v} \leq S_m$ — N / Y

*104* $F*G > P_m$ — N / Y

*120* $t_2 = t_{K1}$ — N / Y

*122* $P_{bm} > P_c$ — Y / N

*124* SET $P_{bm} = P_c$

*106* $P_c = flt\,(F*G)$

*108* $t_1 = 0$ — N / Y

*110* DECREMENT $t_1$

*114* $t_2 = 0$ — Y / N

*116* DECREMENT $t_2$

*118* INCREMENT $P_m$
SET $t_1 = K_n\,(t_2 + 1)$

*112* $P_c = flt\,(P_m * FRAC)$

*126* SET D FLAG
SET $P_m = P_{bm}$
SET $t_1 = t_{K2}$
SET $t_2 = t_{K1}$

*128* EXECUTE DUMP ROUTINE

RETURN

*Fig. 7*